# EUROPEAN PATENT APPLICATION

(11) **EP 4 679 707 A1**
(43) Date of publication of application: **14.01.2026**
(21) Application number: 24766518.5
(22) Date of filing: 08.03.2024
(51) Int. Cl.: H02M 7/72, H02M 7/797, H02M 1/08, H02M 1/088

(54) **CONTROL METHOD FOR AC/DC CONVERSION CIRCUIT, APPARATUS, AND READABLE STORAGE MEDIUM**

(30) Priority: 09.03.2023 CN 202310255024
(71) Applicant: ECOFLOW INC., Guangdong 518000 (CN)
(72) Inventor: HU, Xiong, Shenzhen, Guangdong 518000 (CN); ZHAO, Mi, Shenzhen, Guangdong 518000 (CN); CHEN, Xi, Shenzhen, Guangdong 518000 (CN); WANG, Lei, Shenzhen, Guangdong 518000 (CN)
(74) Representative: Appelt, Christian W.
(86) International application number: PCT/CN2024/080661
(87) International publication number: WO 2024/183804

(57) **Abstract**

A control method for an alternating current (AC)/direct current (DC) conversion circuit includes: controlling the AC/DC conversion circuit to operate in a first drive mode, where in the first drive mode, a switching frequency of a switching transistor of a first bridge arm is a first frequency, and a switching frequency of a switching transistor of a second bridge arm is a second frequency; determining a switching moment based on an alternating current side voltage of the AC/DC conversion circuit when an operating status of the AC/DC conversion circuit satisfies a preset condition; and controlling the inverter circuit to operate in a second drive mode from the switching moment, where in the second drive mode, the switching frequency of the switching transistor of the first bridge arm is the second frequency, and the switching frequency of the switching transistor of the second bridge arm is the first frequency.

## Description

### CROSS-REFERENCE TO RELATED APPLICATIONS

The present application claims priority to Chinese Patent Application No. 202310255024.0, filed with the China National Intellectual Property Administration on March 9, 2023 and entitled "CONTROL METHOD FOR AC/DC CONVERSION CIRCUIT, APPARATUS, AND READABLE STORAGE MEDIUM", which is incorporated herein by reference in its entirety.

### TECHNICAL FIELD

The statements herein merely provide background information related to the present application, and may not necessarily constitute an example technology.

The present application belongs to the field of circuit control technologies, and in particular, relates to a control method for an alternating current (AC)/direct current (DC) conversion circuit, an apparatus, and a computer-readable storage medium.

### BACKGROUND

With the high-frequency use of switch-mode power supplies, a proportion of a loss of a switching transistor in a total loss gradually increases, and the loss of the switching transistor even severely affects service life of an electronic apparatus. For example, in an AC/DC conversion circuit, a switching transistor is usually classified into a high-frequency transistor and a power-frequency transistor. A switching frequency of the high-frequency transistor is much higher than that of the power-frequency transistor. Over time, a switching loss of the high-frequency transistor is much higher than that of the power-frequency transistor, resulting in a high local temperature and non-uniform heat dissipation. Consequently, an inverter has a high requirement on a heat dissipation component, which is prone to an increase of noise of the inverter, and is prone to a circuit failure if heat is not dissipated in time.

### SUMMARY

Various embodiments of the present application provide a control method for an AC/DC conversion circuit, an apparatus, and a computer-readable storage medium.

According to a first aspect, an embodiment of the present application provides a control method for an AC/DC conversion circuit. The control method includes:
controlling the AC/DC conversion circuit to operate in a first drive mode, where in the first drive mode, a switching frequency of a switching transistor of a first bridge arm is a first frequency, and a switching frequency of a switching transistor of a second bridge arm is a second frequency;
determining a switching moment based on an alternating current side voltage of the AC/DC conversion circuit when an operating status of the AC/DC conversion circuit satisfies a preset condition; and
controlling the inverter circuit to operate in a second drive mode from the switching moment, where in the second drive mode, the switching frequency of the switching transistor of the first bridge arm is the second frequency, and the switching frequency of the switching transistor of the second bridge arm is the first frequency.

According to a second aspect, an embodiment of the present application provides an AC/DC conversion apparatus. The AC/DC conversion apparatus includes an AC/DC conversion circuit, a processor, a memory, and a computer program stored on the memory and executable on the processor. When the processor executes the computer program, any control method for an AC/DC conversion circuit according to the first aspect is implemented.

According to a third aspect, an embodiment of the present application provides a computer-readable storage medium. The computer-readable storage medium stores a computer program. When the computer program is executed by a processor, any control method for an AC/DC conversion circuit according to the first aspect is implemented.

According to a fourth aspect, an embodiment of the present application provides a computer program product. When the computer program product is run on a terminal device, the terminal device is enabled to perform any control method for an AC/DC conversion circuit according to the first aspect.

According to a fifth aspect, an embodiment of the present application provides an electronic device. The electronic device includes the foregoing AC/DC conversion apparatus.

Details of one or more embodiments of the present application will be proposed in the following drawings and descriptions. Other features, objectives, and advantages of the present application will become apparent in the specification, the drawings, and the claims.

### BRIEF DESCRIPTION OF THE DRAWINGS

To describe the technical solutions in embodiments of the present application more clearly, the following briefly describes the accompanying drawings required for describing the embodiments or the prior art. It is clear that the accompanying drawings in the following descriptions show merely some embodiments of the present application, and a person of ordinary skill in the art may still derive other drawings from these accompanying drawings without creative efforts.
FIG. 1 is a schematic diagram of a circuit structure of an AC/DC conversion circuit according to an embodiment of the present application;
FIG. 2 is a schematic diagram of driving waveforms of four switching transistors and a waveform of an alternating current side voltage of an AC/DC conversion circuit according to the related art;
FIG. 3 is a schematic flowchart of a control method for an AC/DC conversion circuit according to an embodiment of the present application;
FIG. 4 is a schematic flowchart of a preset condition for an AC/DC conversion circuit according to an embodiment of the present application;
FIG. 5 is a schematic diagram of driving waveforms of four switching transistors and a waveform of an alternating current side voltage of an AC/DC conversion circuit according to an embodiment of the present application;
FIG. 6 is a schematic diagram of a structure of a control apparatus for an AC/DC conversion circuit according to an embodiment of the present application; and
FIG. 7 is a schematic diagram of a structure of an AC/DC conversion apparatus according to an embodiment of the present application.

### DETAILED DESCRIPTION

In the following descriptions, for the purpose of illustration rather than limitation, specific details such as specific system structures and technologies are proposed, to help have a thorough understanding of embodiments of the present application. However, a person skilled in the art shall understand that the present application may be implemented in other embodiments without these specific details. In other cases, detailed descriptions about well-known systems, apparatuses, circuits, and methods are omitted, to prevent unnecessary details from obscuring descriptions of the present application.

An AC/DC conversion circuit is usually for conversion between a direct current voltage and an alternating current voltage. An alternating current (AC) is an alternating current, "alternating current" for short, and is a voltage or a current that periodically changes over time. A direct current (DC) is a direct current, "direct current" for short, and is a voltage or a current whose direction does not periodically change over time.

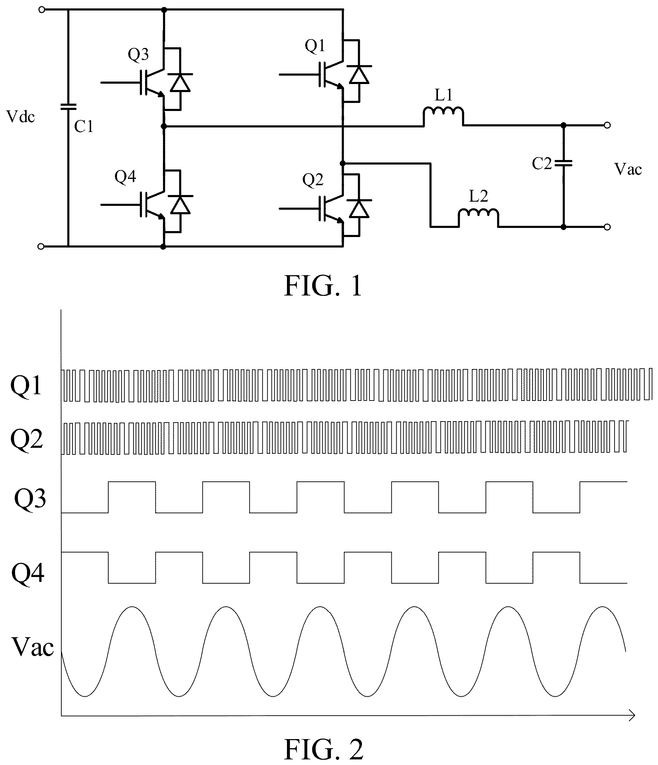

For example, FIG. 1 is a schematic diagram of a circuit structure of an AC/DC conversion circuit according to an embodiment of the present application. As shown in FIG. 1, an input is a direct current, and a direct current voltage is Vdc; and an output is an alternating current of a same frequency as a power grid, and an output voltage is Vac. The AC/DC conversion circuit includes a power-frequency transistor and a high-frequency transistor. As shown in FIG. 1, switching transistors Q1 and Q2 are high-frequency transistors, and switching transistors Q3 and Q4 are power-frequency transistors (that is, low-frequency transistors). The high-frequency transistors Q1 and Q2 are connected in series, and the power-frequency transistors Q3 and Q4 are connected in series. L1 and L2 are inductors, and C1 and C2 are capacitors. The AC/DC conversion circuit shown in FIG. 1 converts the input direct current into the alternating current.

In some applications, the AC/DC conversion circuit shown in FIG. 1 may also be configured to convert an input alternating current into a direct current. In this case, the input is the alternating current Vac, and the output is the direct current Vdc.

In some applications, both the low-frequency transistor and the high-frequency transistor may be driven by a pulse width modulation (PWM) wave to be turned on or turned off. A switching frequency of the low-frequency transistor is usually a power frequency, that is, a mains frequency of a region in which the low-frequency transistor is located, so that the low-frequency transistor is also referred to as a power-frequency transistor. A frequency of a common low-frequency switching transistor is 50 Hz or 60 Hz.

For example, FIG. 2 is a schematic diagram of driving waveforms of four switching transistors and a waveform of an alternating current side voltage of an AC/DC conversion circuit according to the related art. As shown in FIG. 2, the conversion circuit includes Q1, Q2, Q3, and Q4. In control in the related art, Q1 and Q2 are used as high-frequency transistors, and are driven by a high-frequency PWM wave to be turned on or turned off. The two switching transistors are complementarily turned on. To be specific, Q2 is turned off when Q1 is turned on, and Q2 is turned on when Q1 is turned off. Switching frequencies and duty cycles of Q1 and Q2 are determined by a real-time amplitude of the output voltage Vac. Q3 and Q4 are power-frequency transistors, and are driven by a power-frequency PWM wave to be turned on or turned off. Q3 and Q4 are also complementarily turned on.

In the related art, the switching frequency of the high-frequency transistor is much higher than that of the power-frequency transistor. Over time, the high-frequency transistor has a high switching loss and a high temperature, and the power-frequency transistor has a low switching loss and a low temperature, which is prone to non-uniform heat dissipation. Due to non-uniform heat dissipation, an inverter has an extremely high requirement on a heat dissipation component (for example, a heat dissipation fan), which is prone to loud noise of the inverter, and is prone to a failure of the inverter if heat is not dissipated in time.

To solve the foregoing problem, an embodiment of the present application provides a control method for an AC/DC conversion circuit. In this method, a switching moment is determined based on an alternating current side voltage when an operating status of the AC/DC conversion circuit satisfies a preset condition, and a drive mode of the AC/DC conversion circuit is changed at the switching moment, so that switching frequencies of switching transistors are swapped. In this way, the switching frequencies of the switching transistors can be switched dynamically based on the operating status of the AC/DC conversion circuit. According to the method, the switching frequency of the switching transistor can be switched and controlled appropriately, to achieve a temperature balance between a high-frequency transistor and a power-frequency transistor, so that heat dissipation noise of a heat dissipation component is reduced, and stability of the circuit can be improved.

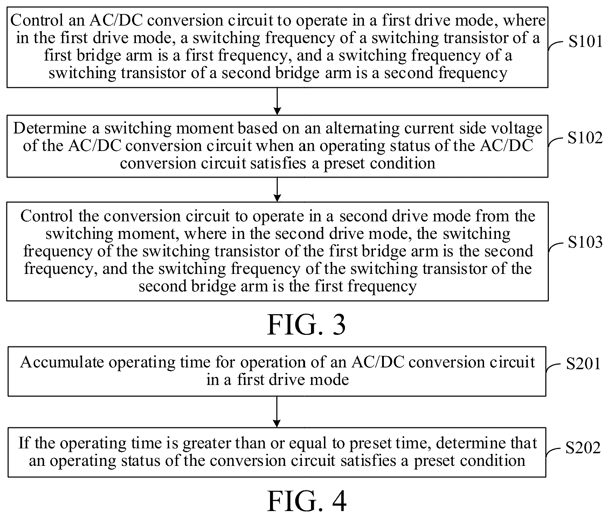

FIG. 3 is a schematic flowchart of a control method for an AC/DC conversion circuit according to an embodiment of the present application. As an example rather than a limitation, the control method for an AC/DC conversion circuit includes steps S101 to S103. The following describes the steps.

Step S101: Control the AC/DC conversion circuit to operate in a first drive mode, where in the first drive mode, a switching frequency of a switching transistor of a first bridge arm is a first frequency, and a switching frequency of a switching transistor of a second bridge arm is a second frequency.

The AC/DC conversion circuit is usually for conversion between an alternating current and a direct current, and a power flow of the AC/DC conversion circuit may be bidirectional. The AC/DC conversion circuit includes the first bridge arm and the second bridge arm, and each bridge arm includes two switching transistors connected in series. For example, in the AC/DC conversion circuit shown in FIG. 1, the first bridge arm may be a branch circuit formed by Q1 and Q2 that are connected in series, and the second bridge arm may be a branch circuit formed by Q3 and Q4 that are connected in series. Certainly, the first bridge arm may alternatively be a branch circuit formed by Q3 and Q4 that are connected in series, and correspondingly, the second bridge arm may be a branch circuit formed by Q1 and Q2 that are connected in series.

The operating status of the AC/DC conversion circuit needs to be monitored during operation of the AC/DC conversion circuit. If the AC/DC conversion circuit operates in the first drive mode (a drive mode is set as needed, and is an operation mode used when the operating status is higher than a preset condition or lower than a preset condition), the switching frequency of the switching transistor of the first bridge arm is denoted as the first frequency, and the switching frequency of the second switching traninvsistor is denoted as the second frequency.

In this embodiment of the present application, the first frequency and the second frequency of the switching transistor are different. For example, when the first frequency is a switching frequency of a power-frequency transistor (that is, a low-frequency transistor), the second frequency is a switching frequency of a high-frequency transistor, and in this case, the second frequency is higher than the first frequency; or when the first frequency is a frequency of a high-frequency transistor, the second frequency is a frequency of a low-frequency transistor, and in this case, the first frequency is higher than the second frequency.

Step S102: Determine a switching moment based on an alternating current side voltage of the AC/DC conversion circuit when an operating status of the AC/DC conversion circuit satisfies the preset condition.

In this embodiment of the present application, the preset condition may be set based on a temperature of the switching transistor, operating time, a number of switching times, and the like. After the preset condition is set, when it is found that the operating status of the conversion circuit reaches the preset condition in a process of monitoring the operating status of the conversion circuit, the switching frequency of the switching transistor may be prepared to be switched.

In this embodiment of the present application, the switching moment is determined by the alternating current side voltage of the AC/DC conversion circuit. In the AC/DC conversion circuit shown in FIG. 1, the alternating current side voltage is Vac. In the circuit shown in FIG. 1, the switching moment is determined by Vac.

In the foregoing embodiment, the switching frequency is switched based on a status of Vac, and the switching moment of the switching frequency is usually a moment at which Vac is at a peak or a zero-crossing point or that is cycle-related. In this embodiment of the present application, the zero-crossing point of Vac is used as the switching moment of the frequency of the switching transistor. A zero-crossing point of a voltage in a circuit is a special moment, and controlling a pulse at this moment well can well control a frequency, a power output, and the like. In addition, if switching is performed at this moment, because the voltage is zero, a switching action can implement smooth switching without affecting the voltage output. Therefore, the frequency of the switching transistor in the conversion circuit can be switched immediately at a moment at which Vac is at the zero-crossing point for the first time when the AC/DC conversion circuit reaches the preset condition.

Step S103: Control the inverter circuit to operate in a second drive mode from the switching moment, where in the second drive mode, the switching frequency of the switching transistor of the first bridge arm is the second frequency, and the switching frequency of the switching transistor of the second bridge arm is the first frequency.

In this embodiment of the present application, when an operation mode of the AC/DC conversion circuit is switched from the first drive mode to the second drive mode, the switching frequency of the switching transistor of the first bridge arm is switched from the first frequency to the second frequency, and the switching frequency of the switching transistor of the second bridge arm is switched from the second frequency to the first frequency. In other words, the switching frequency of the switching transistor of the first bridge arm and the switching frequency of the switching transistor of the second bridge arm are swapped.

For example, when the operation mode of the AC/DC conversion circuit is the first drive mode, the switching transistor of the first bridge arm is a power-frequency transistor, and the switching transistor of the second bridge arm is a high-frequency transistor, that is, the first frequency is higher than the second frequency. When the operating status of the AC/DC conversion circuit satisfies the preset condition, the operation mode of the AC/DC conversion circuit is controlled to be switched from the first drive mode to the second drive mode; and correspondingly, the switching transistor of the first bridge arm is switched to a high-frequency transistor, and the switching transistor of the second bridge arm is switched to a power-frequency transistor. After switching, the first frequency is lower than the second frequency.

According to the control method for an AC/DC conversion circuit provided in the foregoing embodiment, an operating status of the switching transistor in the circuit is monitored in real time, and the switching moment is determined based on the monitored operating status. At the switching moment, the switching frequency of the high-frequency transistor of the circuit is controlled to be switched to the switching frequency of the low-frequency transistor, or the switching frequency of the low-frequency transistor is switched to the switching frequency of the high-frequency transistor, that is, the switching frequency of the switching transistor may be switched dynamically. According to the method, the drive mode of the inverter circuit can be appropriately switched based on the operating status of the circuit, to dynamically regulate the switching frequency of the switching transistor to achieve a heat dissipation balance between the switching transistors, so that not only noise of the device can be reduced, but also the stability of the circuit can be improved.

In this embodiment of the present application, when whether the operating status of the AC/DC conversion circuit satisfies the preset condition is determined, the preset condition may be set based on the temperature of the switching transistor, the operating time, the number of switching times, and the like.

In an embodiment, the operating status of the AC/DC conversion circuit includes the operating time. FIG. 4 is a schematic flowchart of a preset condition for an AC/DC conversion circuit according to an embodiment of the present application. The control method for an AC/DC conversion circuit further includes the following steps.

Step S201: Accumulate operating time for operation of the AC/DC conversion circuit in the first drive mode.

In this embodiment of the present application, the operating time may be accumulated via a timer.

In this embodiment of the present application, a start moment of the operating time in the first drive mode may be a moment at which the AC/DC conversion circuit is switched to the first drive mode or a moment at which the AC/DC conversion circuit enters the first drive mode after powered on. A cut-off moment of the operating time in the first drive mode may be a moment at which the AC/DC conversion circuit is switched to the second drive mode. In this case, the timer is reset, and operating time in the second drive mode starts to be accumulated. Similarly, a start moment of the operating time in the second drive mode may be a moment at which the AC/DC conversion circuit is switched to the second drive mode or a moment at which the AC/DC conversion circuit enters the second drive mode after powered on. A cut-off moment of the operating time in the second drive mode may be a moment at which the AC/DC conversion circuit is switched to the first drive mode.

In some applications, operating time of the AC/DC conversion circuit in different drive modes may be respectively accumulated via two timers, and the corresponding timer starts timing for accumulation each time the AC/DC conversion circuit enters the corresponding drive mode, and stops timing when the AC/DC conversion circuits quits from the corresponding drive mode.

Step S202: If the operating time is greater than or equal to preset time, determine that the operating status of the inverter circuit satisfies the preset condition.

In some embodiments, the preset condition may be the preset time, and the preset time may be set based on an empirical value. For example, statistics of measured data shows that when the operating time reaches T, a local temperature of the circuit is excessively high, or heat is dissipated non-uniformly. In this case, the preset time may be set to the operating time T.

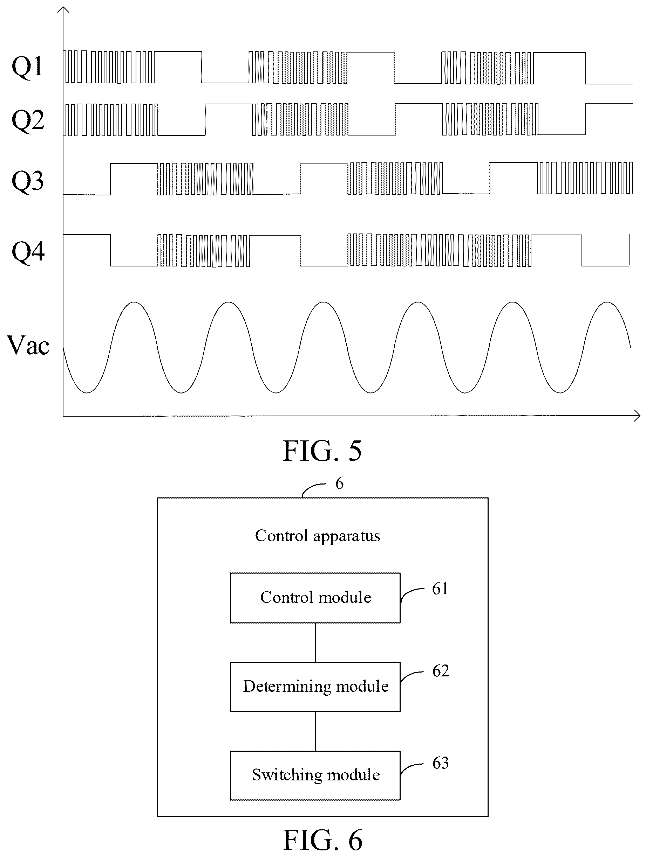

In some other embodiments, the preset time may be one power frequency cycle. For example, a common mains frequency includes 50 Hz and 60 Hz. If a power frequency is 50 Hz, the power frequency cycle is 0.02s, so that 0.02s may be set as the preset time. For example, FIG. 5 is a schematic diagram of driving waveforms of four switching transistors and a waveform of an alternating current side voltage of an AC/DC conversion circuit according to an embodiment of the present application. As shown in FIG. 5, in a first power frequency cycle, Q1 and Q2 are used as high-frequency transistors, and Q3 and Q4 are used as power-frequency transistors. Switching is performed at the end of the first power frequency cycle, to enter a second power frequency cycle. In the second power frequency cycle, Q3 and Q4 are used as high-frequency transistors, and Q1 and Q2 are used as power-frequency transistors. By parity of reasoning, switching is performed again in a third cycle to use Q1 and Q2 as high-frequency transistors and use Q3 and Q4 as power-frequency transistors. Details are not described herein again.

In the foregoing embodiment, FIG. 2 is a schematic diagram of driving waveforms of four switching transistors and a waveform of an alternating current side voltage of an AC/DC conversion circuit when the control method for a inverter circuit according to this embodiment of the present application is not used. It can be learned from FIG. 2 that the switching transistors Q1 and Q2 keep serving as high-frequency transistors, the switching transistors Q3 and Q4 keep serving as power-frequency transistors, and frequencies of the high-frequency transistors and the power-frequency transistors remain unchanged. FIG. 5 is a schematic diagram of driving waveforms of four switching transistors and a waveform of an alternating current side voltage of an AC/DC conversion circuit after the control method for a inverter circuit according to this embodiment of the present application is used. It can be learned from FIG. 5 that the frequencies of the high-frequency transistors and the low-frequency transistors are swapped, that is, the switching transistors Q1 and Q2 and the switching transistors Q3 and Q4 are alternatively used as high-frequency transistors. It can be learned from comparison between FIG. 5 and FIG. 2 that in the method provided in this embodiment of the present application, the frequency of the switching transistor is not constant, and may be switched with a change of the preset condition, and such an improvement can better protect service life of the switching transistor of the AC/DC conversion circuit.

In the method, the preset time is set as the preset condition, so that switching control can be performed more appropriately and effectively to achieve the heat dissipation balance between the switching transistors.

In an embodiment, the operating status of the AC/DC conversion circuit includes the number of switching times. The control method for an AC/DC conversion circuit further includes:
accumulating a number of switching times of any switching transistor of the first bridge arm or the second bridge arm; and
when the number of switching times is greater than or equal to a preset number of times, determining that the operating status of the inverter circuit satisfies the preset condition.

In this embodiment of the present application, a number of switching times of the switching transistor of the first bridge arm is associated with a number of switching times of the switching transistor of the second bridge arm. When the switching transistor of the first bridge arm is a power-frequency transistor, and the switching transistor of the second bridge arm is a high-frequency transistor, a switching frequency of the power-frequency transistor is f2, a corresponding switching cycle is T2, and time for one instance of switching is also T2; and a switching frequency of the high-frequency transistor is f1, a corresponding switching cycle is T1, and time for one instance of switching of the power-frequency transistor is n1=T2/T1. Therefore, only statistics on the number of switching times of any switching transistor of the first bridge arm or the second bridge arm needs to be collected.

Optionally, statistics on a number of switching times of the power-frequency transistor is collected. For example, when the switching transistor of the first bridge arm is a power-frequency transistor, statistics on the number of switching times of the switching transistor of the first bridge arm is collected. After the switching transistor of the first bridge arm is switched from a power-frequency transistor to a high-frequency transistor, and the switching transistor of the second bridge arm is switched from a high-frequency transistor to a power-frequency transistor, statistics on the number of switching times of the switching transistor of the second bridge arm is collected. In this embodiment of the present application, the preset condition may be set as that the number of switching times of the switching transistor is greater than or equal to the preset number of times.

It may be understood that the two switching transistors of each bridge arm are complementarily turned on, so that the numbers of switching times of the two switching transistors are necessarily the same. When statistics on the number of switching times of the switching transistor of any bridge arm is collected, only statistics on the number of times of the upper switching transistor is collected, or only statistics on the number of times of the lower switching transistor is collected. This is not limited in the present application.

In the foregoing embodiment, the number of switching times of the switching transistor is in positive correlation with a temperature of the switching transistor, that is, a larger number of switching times of the switching transistor indicates a higher temperature of the switching transistor. The number of switching times is determined by running duration and the switching frequency. Therefore, relationships between numbers of switching times and temperatures of switching transistors of different models are predetermined, so that an allowed number of switching times corresponding to the high-frequency transistor or the power-frequency transistor can be determined.

For example, if statistics on the number of switching times of the power-frequency transistor is collected, the preset number of times may be set to N2max; or if statistics on the number of switching times of the high-frequency transistor is collected, the preset number of times may be set to N1max, where N1max/N2max=T2/T1.

It may be understood that when an electronic component is used, a maximum number of switching times of the switching transistor is limited. The number of switching times of the switching transistor is detected, and a prompt may be further given when the number of switching times reaches the maximum number of switching times, so that the electronic component can be replaced before service life of the electronic component reaches a limit, to better maintain the device.

According to the method, the number of switching times of the switch is used as the preset condition for the conversion circuit, so that not only usage of the switching transistor can be monitored, but also the frequency of the switching transistor in the conversion circuit can be controlled to be switched based on the number of switching times of the switching transistor, which can prolong the service life of the switching transistor.

In an embodiment, the operating status of the AC/DC conversion circuit includes the temperature of the switching transistor. The control method for an AC/DC conversion circuit further includes:
calculating a temperature difference between the switching transistor of the first bridge arm and the switching transistor of the second bridge arm; and
when the temperature difference is greater than or equal to a preset temperature threshold, determining that the operating status of the inverter circuit satisfies the preset condition.

In this embodiment of the present application, the preset condition may be set as that the temperature difference between the switching transistors is greater than or equal to the preset temperature threshold. For example, if an allowed maximum temperature difference between the fast power-frequency transistor and the high-frequency transistor is ΔTmax, when it is detected that the temperature difference between the fast power-frequency transistor and the high-frequency transistor reaches ΔTmax, it may be determined that the operating status of the conversion circuit satisfies the preset condition, and the frequency of the fast power-frequency transistor may be switched when the alternating current side voltage arrives at the switching moment.

For example, if the switching transistor of the first bridge arm is used as a high-frequency transistor, and the switching transistor of the second bridge arm is used as a power-frequency transistor, a temperature sensor may be disposed to detect a first temperature corresponding to the upper switching transistor of the first bridge arm and a second temperature corresponding to the upper switching transistor of the second bridge arm, and when a difference between the first temperature and the second temperature reaches ΔTmax, it may be determined that the operating status satisfies the preset condition.

According to the method, the temperature sensor is disposed in the circuit to detect a temperature of the fast power-frequency transistor. The temperature of the switching transistor is related to the number of times of the switching transistor, so that setting the temperature threshold as the preset condition can more conveniently monitor the temperature of the fast power-frequency transistor and the number of switching times of the switching transistor, which is more conducive to switching of the frequency of the switching transistor.

In an embodiment, the control method for an AC/DC conversion circuit further includes:
obtaining a temperature of the switching transistor of the first bridge arm and a temperature of the switching transistor of the second bridge arm via a temperature sampling component.

During temperature detection, a temperature sampler (also referred to as the temperature sensor) may be disposed in the circuit for detection, for example, a negative temperature coefficient (NTC) thermistor, a thermocouple, and a resistance temperature detector, temperatures of the high-frequency transistor and the power-frequency transistor may be detected via the temperature sampler, and when a temperature difference between the temperatures reaches ΔTmax, the switching frequency is switched.

In an embodiment, during determining of the switching moment based on the alternating current side voltage of the inverter circuit when the operating status of the inverter circuit satisfies the preset condition, the control method for an AC/DC conversion circuit further includes:
determining, when the operating status of the AC/DC conversion circuit satisfies the preset condition, whether the alternating current side voltage of the AC/DC conversion circuit is at a zero voltage point; and
determining a moment corresponding to arrival of the alternating current side voltage at the zero voltage point as the switching moment when the alternating current side voltage of the AC/DC conversion circuit is not at the zero voltage point; or
determining a current moment as the switching moment when the alternating current side voltage of the AC/DC conversion circuit is at the zero voltage point.

In this embodiment of the present application, the alternating current side voltage necessarily passes through a zero point when switching from positive to negative or from negative to positive, and this zero point is referred to as a zero-crossing point. The zero-crossing point is determined as the switching moment. If it is the moment at which the voltage is at the zero-crossing point when the operating status satisfies the preset condition, switching is performed immediately to swap the switching frequencies of the first bridge arm and the second bridge arm. If it is not the moment at which the voltage is at the zero-crossing point when the operating status satisfies the preset condition, switching is performed at a first moment at which the voltage is at the zero-crossing point after the preset condition is satisfied. In this way, switching can be performed more smoothly, and impact of switching of the switching frequency on stability of the alternating current side voltage can be avoided. It should be understood that a sequence number of each step in the foregoing embodiment does not mean an order of execution, and an order of execution of each process should be determined by a function of the process and internal logic, and shall not constitute any limitation on an implementation process of this embodiment of the present application.

Corresponding to the control method for an AC/DC conversion circuit in the foregoing embodiment, FIG. 6 is a schematic diagram of a structure of a control apparatus for an AC/DC conversion circuit according to an embodiment of the present application. For ease of description, only parts related to this embodiment of the present application are shown.

Refer to FIG. 6. The apparatus includes:
a control module 61, configured to control the AC/DC conversion circuit to operate in a first drive mode, where in the first drive mode, a switching frequency of a switching transistor of a first bridge arm is a first frequency, and a switching frequency of a switching transistor of a second bridge arm is a second frequency;
a determining module 62, configured to determine a switching moment based on an alternating current side voltage of the AC/DC conversion circuit when an operating status of the AC/DC conversion circuit satisfies a preset condition; and
a switching module 63, configured to control the inverter circuit to operate in a second drive mode from the switching moment, where in the second drive mode, the switching frequency of the switching transistor of the first bridge arm is the second frequency, and the switching frequency of the switching transistor of the second bridge arm is the first frequency.

Optionally, the determining module 62 is further configured to: accumulate operating time for operation of the AC/DC conversion circuit in the first drive mode; and if the operating time is greater than or equal to preset time, determine that the operating status of the inverter circuit satisfies the preset condition.

Optionally, the determining module 62 is further configured to: accumulate a number of switching times of any switching transistor of the first bridge arm or the second bridge arm; and when the number of switching times is greater than or equal to a preset number of times, determine that the operating status of the inverter circuit satisfies the preset condition.

Optionally, the determining module 62 is further configured to: calculate a temperature difference between the switching transistor of the first bridge arm and the switching transistor of the second bridge arm; and when the temperature difference is greater than or equal to a preset temperature threshold, determine that the operating status of the inverter circuit satisfies the preset condition.

Optionally, the switching module 63 is further configured to: determine, when the operating status of the AC/DC conversion circuit satisfies the preset condition, whether the alternating current side voltage of the AC/DC conversion circuit is at a zero voltage point; and determine a moment corresponding to arrival of the alternating current side voltage at the zero voltage point as the switching moment when the alternating current side voltage of the AC/DC conversion circuit is not at the zero voltage point.

Optionally, the switching module 63 is further configured to: determine, when the operating status of the AC/DC conversion circuit satisfies the preset condition, whether the alternating current side voltage of the inverter circuit is at a zero voltage point; and determine a current moment as the switching moment when the alternating current side voltage of the AC/DC conversion circuit is at the zero voltage point.

It should be noted that content such as information exchange between and execution processes of the foregoing apparatuses/units is based on a same concept as the method embodiment of the present application. Therefore, for specific functions and technical effects thereof, refer to the method embodiments. Details are not described herein again.

In addition, the control apparatus for an AC/DC conversion circuit shown in FIG. 6 may be a software unit, a hardware unit, or a software and hardware unit built in an existing terminal device, may be integrated into a terminal device as an independent module, or may exist as an independent terminal device.

A person skilled in the art may clearly understand that for the purpose of convenient and brief descriptions, division into the foregoing functional units or modules is merely used as an example for description. During actual application, the foregoing functions may be allocated to different functional units or modules for implementation according to a requirement, that is, an internal structure of the apparatus is divided into different functional units or modules to implement all or a part of the functions described above. The functional units or modules in the embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units or modules are merely for ease of distinguishing from each other, and are not intended to limit the protection scope of the present application. For specific working processes of units or modules in a system described above, refer to corresponding processes in the foregoing method embodiments. Details are not described herein again.

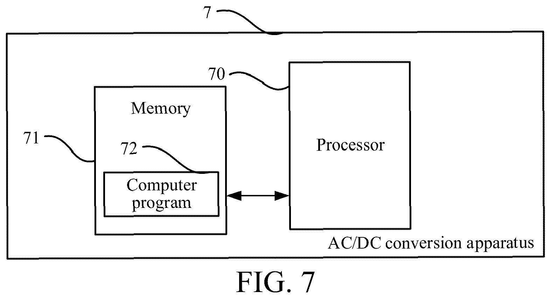

FIG. 7 is a schematic diagram of a structure of an AC/DC conversion apparatus according to an embodiment of the present application. As shown in FIG. 7, the AC/DC conversion apparatus 7 of this embodiment includes an AC/DC conversion circuit (not shown in the figure), at least one processor 70 (only one processor is shown in FIG. 7), a memory 71, and a computer program 72 stored on the memory 71 and executable on the at least one processor 70. When the processor 70 executes the computer program 72, the steps in any one of the foregoing embodiments of the control method for an AC/DC conversion circuit are implemented.

A person skilled in the art may understand that FIG. 7 is merely an example of the AC/DC conversion apparatus 7, does not constitute a limitation on the AC/DC conversion apparatus 7, and may include more or fewer components than those shown in the figure, or combine some components, or have different components, for example, may further include an input/output device, a network access device, and the like.

The processor 70 may be a central processing unit (CPU). Alternatively, the processor 70 may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor. Alternatively, the processor may be any conventional processor or the like.

In some embodiments, the memory 71 may be an internal storage unit of the AC/DC conversion apparatus 7, for example, a hard disk drive or an internal memory of the AC/DC conversion apparatus 7. In some other embodiments, the memory 71 may be an external storage device of the AC/DC conversion apparatus 7, for example, a plug-in hard disk drive, a smart media card (SMC), a secure digital (SD) card, or a flash card configured on the AC/DC conversion apparatus 7. Further, the memory 71 may alternatively include both an internal storage unit and an external storage device of the AC/DC conversion apparatus 7. The memory 71 is configured to store an operating system, an application, a boot loader, data, another program, and the like, for example, program code of a computer program. The memory 71 may be further configured to temporarily store data that has been output or is to be output.

An embodiment of the present application further provides an electronic device. The electronic device includes the AC/DC conversion apparatus 7 shown in FIG. 7. The electronic device may be a device with an AC/DC function, such as an independent power conversion device, an energy storage device with a built-in battery, a mobile refrigerator requiring power conversion, a mobile air conditioner, or a self-moving device. This is not limited in the present application.

An embodiment of the present application further provides a computer-readable storage medium. The computer-readable storage medium stores a computer program. When the computer program is executed by a processor, the steps in each of the foregoing method embodiments are implemented.

An embodiment of the present application provides a computer program product. When the computer program product is run on a terminal device, the terminal device is enabled to implement the steps in any one of the foregoing method embodiments.

When the integrated unit is implemented in a form of a software functional unit and sold or used as an independent product, the integrated unit may be stored in a computer-readable storage medium. Based on such an understanding, all or a part of the procedure of the method in the foregoing embodiments of the present application may be implemented by a computer program instructing related hardware. The computer program may be stored in a computer-readable storage medium. When the computer program is executed by a processor, the steps of the method embodiments may be implemented. The computer program includes computer program code, and the computer program code may be in a form of source code, object code, or an executable file, or in some intermediate forms, or the like. The computer-readable medium may include at least any entity or apparatus capable of carrying the computer program code to an apparatus/terminal device, a recording medium, a computer memory, a read-only memory (ROM), a random access memory (RAM), an electrical carrier signal, a telecommunication signal, and a software distribution medium, for example, a USB drive, a mobile hard disk drive, a magnetic disk, or an optical disk. In some jurisdictions, under legislation and patent practice, the computer-readable medium may not be the electrical carrier signal or the telecommunication signal.

In the foregoing embodiments, the descriptions of various embodiments have respective focuses. For a part that is not described or recorded in detail in an embodiment, refer to related descriptions in other embodiments.

A person of ordinary skill in the art may be aware that the units and algorithm steps in the examples described with reference to the embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it shall not be considered that the implementation goes beyond the scope of this application.

In the embodiments provided in the present application, it should be understood that the disclosed apparatus/terminal device and method may be implemented in other manners. For example, the described apparatus/terminal device embodiment is merely an example. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. A part or all of the units may be selected based on actual requirements, to achieve the objectives of the solutions of the embodiments.

In conclusion, the foregoing embodiments are merely intended to describe the technical solutions of the present application, but not to limit the present application. Although the present application is described in detail with reference to the foregoing embodiments, a person of ordinary skill in the art should understand that modifications may still be made to the technical solutions described in the foregoing embodiments or equivalent replacements may be made to a part of technical features thereof, without departing from the spirit and scope of the technical solutions in the embodiments of the present application, and these modifications or replacements made without departing the essence of the corresponding technical solutions from the spirit and scope of the technical solutions of the embodiments of the present application shall fall within the protection scope of the present application.

## Claims

1. A control method for an alternating current (AC)/direct current (DC) conversion circuit, wherein the AC/DC conversion circuit comprises a first bridge arm and a second bridge arm, each bridge arm comprises two switching transistors connected in series, and the control method comprises:
controlling the AC/DC conversion circuit to operate in a first drive mode, wherein in the first drive mode, a switching frequency of the switching transistor of the first bridge arm is a first frequency, and a switching frequency of the switching transistor of the second bridge arm is a second frequency;
determining a switching moment based on an alternating current side voltage of the AC/DC conversion circuit when an operating status of the AC/DC conversion circuit satisfies a preset condition; and
controlling the conversion circuit to operate in a second drive mode from the switching moment, wherein in the second drive mode, the switching frequency of the switching transistor of the first bridge arm is the second frequency, and the switching frequency of the switching transistor of the second bridge arm is the first frequency.

2. The control method for an AC/DC conversion circuit according to claim 1, wherein the operating status comprises operating time, and the method further comprises:
accumulating operating time for operation of the AC/DC conversion circuit in the first drive mode; and
if the operating time is greater than or equal to preset time, determining that the operating status of the conversion circuit satisfies the preset condition.

3. The control method for an AC/DC conversion circuit according to claim 1, wherein the operating status comprises a number of switching times, and the method further comprises:
accumulating a number of switching times of any switching transistor of the first bridge arm or the second bridge arm; and
when the number of switching times is greater than or equal to a preset number of times, determining that the operating status of the conversion circuit satisfies the preset condition.

4. The control method for an AC/DC conversion circuit according to claim 1, wherein the operating status comprises a temperature of the switching transistor, and the method further comprises:
calculating a temperature difference between the switching transistor of the first bridge arm and the switching transistor of the second bridge arm; and
when the temperature difference is greater than or equal to a preset temperature threshold, determining that the operating status of the conversion circuit satisfies the preset condition.

5. The control method for an AC/DC conversion circuit according to claim 4, wherein the method further comprises:
obtaining a temperature of the switching transistor of the first bridge arm and a temperature of the switching transistor of the second bridge arm via a temperature sampling component.

6. The control method for an AC/DC conversion circuit according to claim 1, wherein the determining a switching moment based on an alternating current side voltage of the conversion circuit when an operating status of the conversion circuit satisfies a preset condition comprises:
determining, when the operating status of the AC/DC conversion circuit satisfies the preset condition, whether the alternating current side voltage of the AC/DC conversion circuit is at a zero voltage point; and
determining a moment corresponding to arrival of the alternating current side voltage at the zero voltage point as the switching moment when the alternating current side voltage of the AC/DC conversion circuit is not at the zero voltage point.

7. The control method for an AC/DC conversion circuit according to claim 1, wherein the determining a switching moment based on an alternating current side voltage of the conversion circuit when an operating status of the conversion circuit satisfies a preset condition comprises:
determining, when the operating status of the AC/DC conversion circuit satisfies the preset condition, whether the alternating current side voltage of the conversion circuit is at a zero voltage point; and
determining a current moment as the switching moment when the alternating current side voltage of the AC/DC conversion circuit is at the zero voltage point.

8. The control method for an AC/DC conversion circuit according to any one of claims 1 to 7, wherein the first frequency is a frequency of the alternating current side voltage of the AC/DC conversion circuit, and the second frequency is higher than the first frequency.

9. An alternating current (AC)/direct current (DC) conversion apparatus, comprising an AC/DC conversion circuit, a processor, a memory, and a computer program stored on the memory and executable on the processor, wherein when the processor executes the computer program, the method according to any one of claims 1 to 8 is implemented.

10. An electronic device, wherein the electronic device comprises the alternating current (AC)/direct current (DC) conversion apparatus according to claim 9.
